# FASCICULE DE BREVET EUROPEEN

(11) **EP 0 772 992 B1**
(45) Date de publication et mention de la délivrance du brevet: **17.02.1999**
(21) Numéro de dépôt: 96402358.4
(22) Date de dépôt: 06.11.1996
(51) Int. Cl.: A47J 37/06

(54) **Appareil de cuisson comprenant deux plaques de cuisson reliées l'une à l'autre par une charnière**
Kochgerät mit zwei Kochplatten die mittels eines Scharniers miteinander verbunden sind
Cooking apparatus with two cooking plates linked to each other by a hinge

(30) Priorité: 10.11.1995 FR 9513349
(43) Date de publication de la demande: 14.05.1997
(73) Titulaire: SEB S.A., 69130 Ecully (FR)
(72) Inventeur: Gruaz, Denis, 74000 Annecy (FR)
(74) Mandataire: Rémont, Claude

(56) Documents cités:
- EP-A- 0 462 872
- FR-A- 2 262 947
- US-A- 2 520 997
- US-A- 3 490 358
- US-A- 5 363 748

## Description

L'invention concerne un appareil de cuisson comprenant deux plaques de cuisson reliées l'une à l'autre par une charnière.

Il existe des appareils de cuisson, par exemple de type gaufrier ou grill, qui comprennent deux plaques de cuisson reliées l'une à l'autre par une charnière.

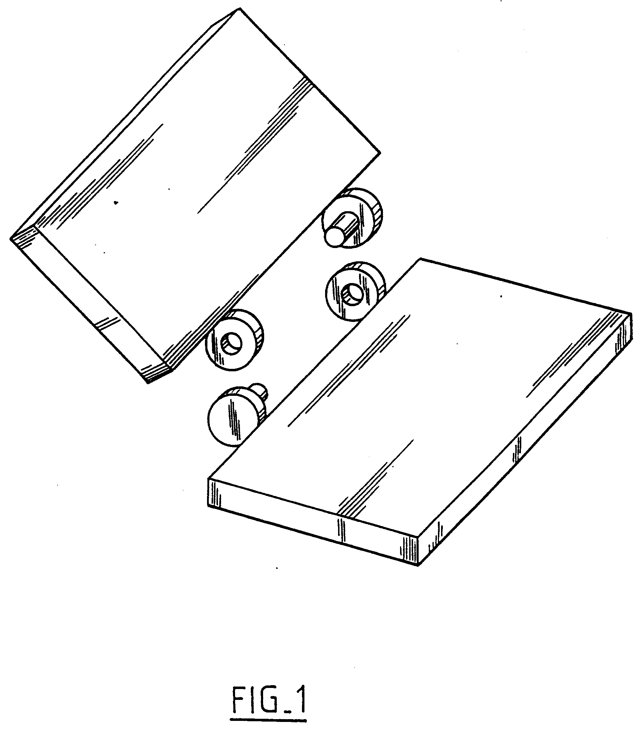

Un tel appareil de cuisson selon l'état antérieur de la technique est représenté Figure 1. La fabrication des plaques de cet appareil nécessite une opération d'alésage dans les parties femelles des éléments de charnière, ce qui la rend complexe et onéreuse.

En outre, lors de la fabrication de l'appareil de cuisson, le montage de la charnière est réalisé au moyen de mouvements complexes impliquant de nombreux contrôles de positionnement, ce qui augmente encore le prix de l'appareil.

Par ailleurs, les deux plaques pouvant se déplacer longitudinalement l'une par rapport à l'autre, le positionnement relatif des deux plaques le long de l'axe d'articulation n'est pas parfaitement assuré et, d'autre part, les plaques peuvent se séparer quelle que soit leur position relative angulaire.

Ceci va à l'encontre de la sécurité qui implique un bon maintien des plaques dans leur position relative, et l'impossibilité de leur séparation intempestive durant l'utilisation de l'appareil de cuisson.

Le document EP A 462 872 décrit également un appareil de cuisson ayant des éléments de charnière qui nécessitent des mouvements complexes pour être introduits les uns dans les autres.

Le but de la présente invention est de remédier aux inconvénients ci-dessus en créant un appareil de cuisson amélioré apportant un certain nombre d'avantages techniques, non seulement à l'égard de l'appareil décrit ci-dessus, mais également à l'égard des appareils de cuisson connus par ailleurs.

L'invention vise ainsi un appareil de cuisson comprenant deux plaques de cuisson reliées l'une à l'autre suivant un axe d'articulation s'étendant entre deux bords longitudinaux adjacents des deux plaques, ces dernières étant mobiles l'une vers l'autre entre une position dans laquelle les deux plaques sont sensiblement dans un même plan, position de montage de la charnière, et une position dans laquelle les deux plaques sont appliquées l'une sur l'autre; le bord longitudinal de l'une des plaques portant deux éléments de charnière espacés coopérant avec deux éléments de charnière espacés portés par le bord longitudinal de l'autre plaque, au moyen de tenons engagés dans des ouvertures complémentaires s'étendant suivant l'axe d'articulation.

Suivant l'invention, cet appareil est caractérisé en ce que les deux éléments de charnière portés par l'une des plaques comportent chacun un tenon; en ce que les deux éléments de charnière portés par l'autre plaque comportent chacun un évidement à fond circulaire adapté à loger un tenon, les deux évidements s'ouvrant vers la face de ladite autre plaque opposée à la face de cuisson; en ce qu'entre les deux éléments de charnière de chaque plaque, le bord de celle-ci porte une surface de section en forme d'arc de cercle centré sur l'axe d'articulation des deux plaques, les deux surfaces venant se superposer lorsque les deux plaques sont appliquées l'une sur l'autre. Cette disposition permet d'éviter l'opération d'alésage des parties femelles de la charnière durant la fabrication et d'empêcher toute séparation intempestive des plaques pendant l'utilisation de l'appareil de cuisson.

Le montage est plaques lors de la fabrication de l'appareil est grandement simplifié et se résume à un mouvement très simple.

Selon une version préférée de l'invention, les éléments de charnière sont moulés d'une seule pièce avec les plaques de cuisson, de manière à simplifier la fabrication et à en réduire le coût.

Selon une variante de l'invention, les deux tenons faisant partie des deux éléments de charnière portés par l'une des plaques de cuisson sont dirigés l'un vers l'autre. Cette disposition permet d'assurer un positionnement correct des deux plaques le long de l'axe d'articulation et son maintien durant l'utilisation de l'appareil de cuisson.

D'autres particularités et avantages de l'invention apparaîtront encore dans la description ci-après.

Aux dessins annexés donnés à titre d'exemples et non limitatifs :
- la Figure 1 représente en perspective un appareil de cuisson comprenant deux plaques de cuisson selon l'art antérieur.
- la Figure 2a est une vue partielle en perspective de l'une des plaques de cuisson conforme à l'invention.
- la Figure 2b est une vue partielle en perspective de l'autre plaque de cuisson conforme à l'invention.
- la Figure 3 est une vue en perspective montrant les deux plaques de cuisson lorsqu'elles sont assemblées lors de du montage de l'appareil de cuisson.
- la Figure 4 représente une vue partielle de coté des deux plaques lorsqu'elles sont assemblées lors du montage de l'appareil de cuisson.
- la Figure 5 est une vue partielle en coupe des deux plaques assemblées.

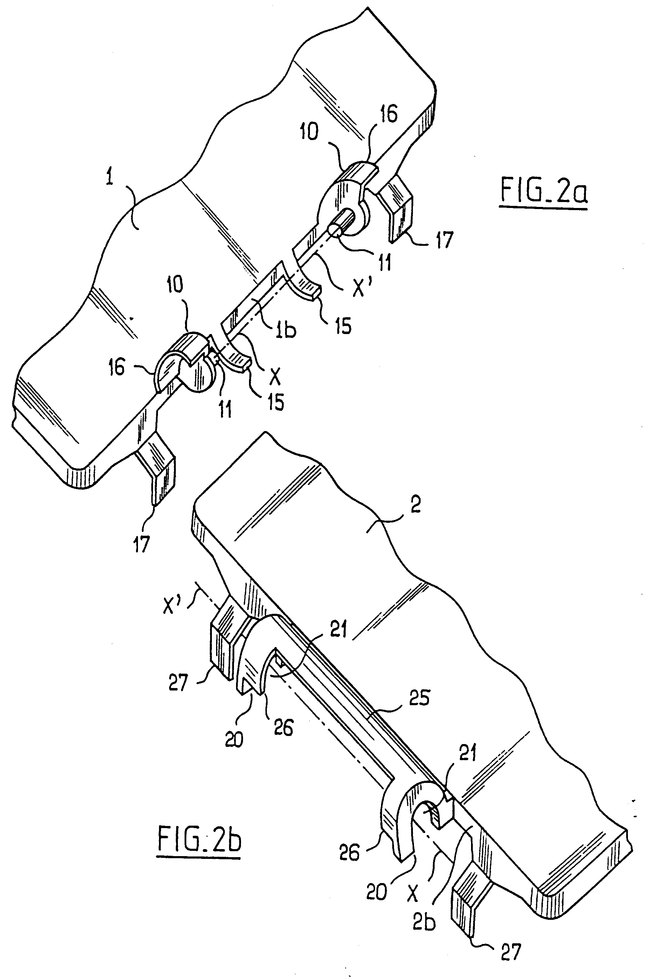

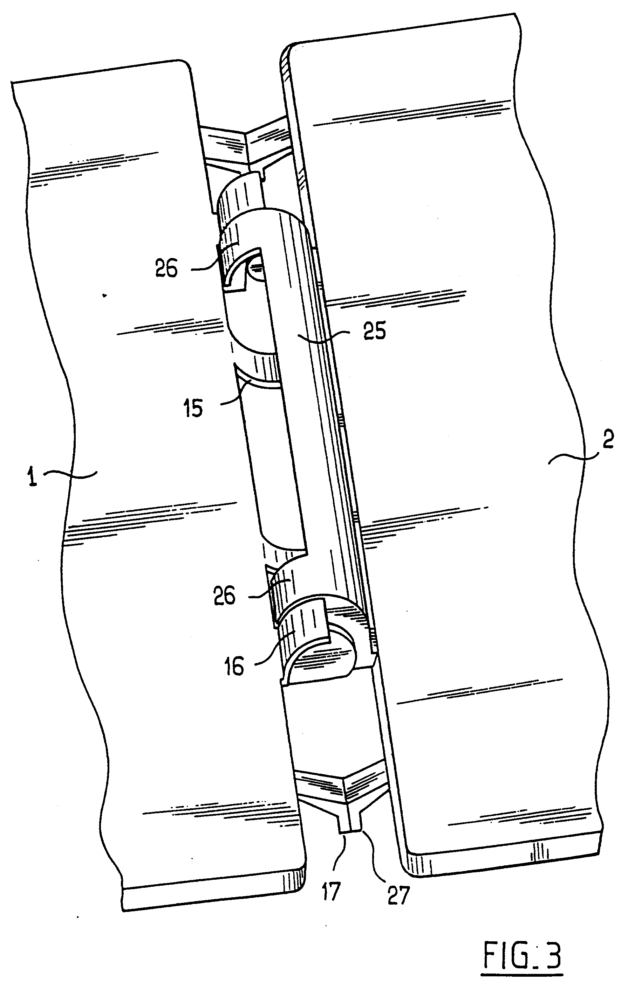

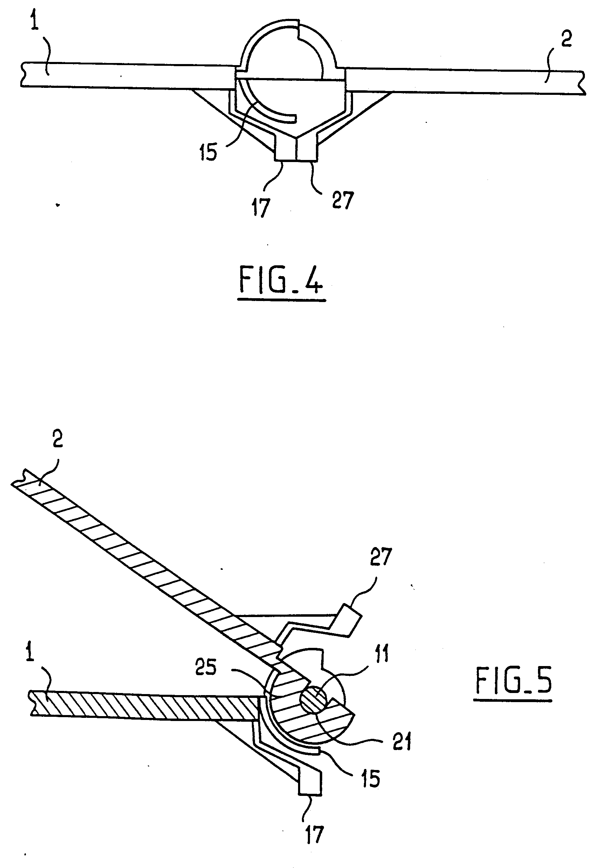

Dans la réalisation de l'invention représentée sur les Figures 2 à 5, l'appareil de cuisson comprend deux plaques 1 et 2 de cuisson reliées l'une à l'autre suivant un axe d'articulation X-X' s'étendant entre deux bords longitudinaux 1b et 2b adjacents des deux plaques. Les deux plaques 1 et 2 sont mobiles l'une vers l'autre entre une position dans laquelle elles sont situées sensiblement dans un même plan, position représentée sur les figures 3 et 4 et qui correspond à la position d'assemblage des plaques lors de la fabrication de l'appareil de cuisson, et une position dans laquelle les deux plaques sont appliquées l'une sur l'autre, position qui correspond à la phase de cuisson.

Le bord longitudinal 1b de l'une des plaques 1 porte des éléments de charnière espacés 10 qui coopèrent avec des éléments de charnières espacés 20 portés par le bord longitudinal 2b de l'autre plaque 2, au moyen de tenons 11 qui s'engagent dans des ouvertures complémentaires 21 s'étendant suivant l'axe d'articulation X-X'.

Conformément à l'invention, les deux éléments de charnière 10 portés par l'une des plaques 1 représentée Figure 2a comportent chacun un tenon 11. Les deux éléments de charnière 20 portés par l'autre plaque 2 représentée Figure 2b comportent chacun un évidement à fond circulaire 21 ouvert vers l'extérieur, les deux tenons 11 étant engagés dans les deux évidements 21. Entre les deux éléments de charnière 10 et 20 de chaque plaque, le bord 1b,2b de celle-ci porte une surface de section en forme d'arc de cercle 15 et 25 centrée sur l'axe d'articulation X-X' des deux plaques 1,2. Les deux surfaces 15 et 25 se superposent lorsque les deux plaques 1 et 2 sont appliquées l'une sur l'autre, comme représenté sur la Figure 5.

Selon un mode de réalisation préféré de l'invention, les éléments de charnière 10 et 20 sont moulés d'une seule pièce avec les plaques de cuisson respectivement 1 et 2. Les deux plaques peuvent être moulées en alliage d'aluminium et comportent des reliefs, par exemple des reliefs de gaufres ou de croque-monsieur, correspondant à leur fonction. Les surfaces de cuisson des plaques sont de préférence recouvertes d'un produit anti-adhésif tel que le polytétrafluoréthylène.

Comme représenté à la Figure 2a, les tenons 11 sont dirigés l'un vers l'autre.

Les Figures 2 à 5 montrent d'autre part que lesdits évidements à fond circulaire 21 s'ouvrent vers les faces des plaques opposées à leurs faces de cuisson, que lesdites surfaces de section en arc de cercle 15 et 25 s'étendent suivant un arc d'environ 90° à partir des bords longitudinaux respectifs des plaques, et que l'une des surfaces de section en arc de cercle 15 est constituée par deux pattes espacées alors que l'autre surface de section en arc de cercle 25 est constituée par une surface s'étendant entre les deux éléments de charnière 21 correspondant.

Pour augmenter la rigidité et la résistance des éléments de charnière 10 et 20, chacun d'entre eux porte une surface de section en forme d'arc de cercle 16 et 26 s'étendant suivant un arc sensiblement égal ou supérieur à 90° à partir du bord longitudinal adjacent de la plaque correspondante.

La surface de section en forme d'arc de cercle 16 et 26 s'étend vers l'extérieur des plaques pour les deux éléments de charnière 10 portant les tenons 11 et s'étend vers l'intérieur des plaques pour les deux éléments de charnière 20 portant les évidements 21.

Le rayon desdits arc de cercle est légèrement inférieur à la moitié de la distance comprise entre les deux bords longitudinaux des plaques.

On voit également que chaque plaque porte sur sa face opposée à la face de cuisson deux pieds 17 et 27 adjacents auxdits deux bords longitudinaux des plaques. Ces pieds viennent en butée lorsque les deux plaques sont disposées sensiblement dans un même plan (phase d'assemblage de la charnière), comme représenté sur la Figure 4.

L'appareil de cuisson que l'on vient de décrire présente les avantages suivant :
- lors de la fabrication de l'appareil de cuisson, les opérations de montage des deux plaques 1 et 2 sont faciles à réaliser lorsque les deux plaques sont sensiblement dans un même plan.
- en revanche, lors de l'utilisation de l'appareil de cuisson, le démontage intempestif des plaques 1 et 2 est impossible lorsqu'elles pivotent l'une vers l'autre: les surfaces de section en forme d'arc de cercle 15 et 25 empêchent tout déboîtement en se superposant. Le positionnement relatif des plaques le long de l'axe d'articulation X-X' est assuré par les tenons 11 engagés dans les évidements à fond circulaire 21.
- les plaques 1 et 2 sont moulées d'une seule pièce, sans nécessiter d'opération d'alésage ultérieure. Leur fabrication est donc simple et peu onéreuse.

Bien entendu, l'invention n'est pas limitée à l'exemple de réalisation que l'on vient de décrire, et on peut apporter à celui-ci de nombreuses modifications sans sortir du cadre de l'invention.

## Revendications

1. Appareil de cuisson comprenant deux plaques de cuisson (1, 2) reliées l'une à l'autre suivant un axe d'articulation s'étendant entre deux bords longitudinaux adjacents des deux plaques, ces dernières étant mobiles l'une vers l'autre entre une position dans laquelle les deux plaques sont sensiblement dans un même plan et une position dans laquelle les deux plaques sont appliquées l'une sur l'autre, le bord longitudinal de l'une des plaques (1) portant deux éléments de charnière espacés (10) coopérant avec deux éléments de charnière espacés (20) portés par le bord longitudinal de l'autre plaque (2), au moyen de tenons (11) engagés dans des ouvertures complémentaires (21) s'étendant suivant l'axe d'articulation, caractérisé en ce que les deux éléments de charnière (10) portés par l'une des plaques (1) comportent chacun un tenon (11); en ce que les deux éléments de charnière (20) porté par l'autre plaque (2) comportent chacun un évidement à fond circulaire adapté à loger un tenon, les deux évidements s'ouvrant vers la face de ladite autre plaque opposée à la face de cuisson, en ce qu'entre les deux éléments de charnière (10, 20) de chaque plaque, le bord de celle-ci porte une surface de section en forme d'arc de cercle (15, 25) centré sur l'axe d'articulation des deux plaques, les deux surfaces venant se superposer lorsque les deux plaques sont appliquées l'une sur l'autre.

2. Appareil de cuisson conforme à la revendication 1, caractérisé en ce que les éléments de charnière (10, 20) sont moulés d'une seule pièce avec les plaques de cuisson (1, 2).

3. Appareil de cuisson conforme à l'une des revendications 1 ou 2, caractérisé en ce que les tenons(11) portés par les éléments de charnière (10) de l'une des plaques sont dirigés l'un vers l'autre.

4. Appareil de cuisson conforme à l'une des revendications 1 à 3, caractérisé en ce que lesdites surfaces de section en arc de cercle (15, 25) s'étendent suivant un arc d'environ 90° à partir des bords longitudinaux respectifs des plaques.

5. Appareil de cuisson conforme à l'une des revendications 1 à 4, caractérisé en ce que l'une des surfaces de section en arc de cercle (15) est constituée par deux pattes espacées.

6. Appareil de cuisson conforme à l'une des revendications 1 à 5 caractérisé en ce que l'autre surface de section en arc de cercle (25) est constituée par une surface s'étendant entre les deux éléments de charnière (20) correspondant.

7. Appareil de cuisson conforme à l'une des revendications 1 à 6 caractérisé en ce que chaque élément de charnière (10, 20) porte une surface de section en forme d'arc de cercle (16, 26) s'étendant suivant un arc sensiblement égal ou supérieur à 90° à partir du bord longitudinal adjacent de la plaque correspondante.

8. Appareil de cuisson conforme à la revendication 7 caractérisé en ce que ladite surface de section en forme d'arc de cercle (16, 26) s'étend vers l'extérieur des plaques pour les deux éléments de charnière (10) portant les tenons (11) et s'étend vers l'intérieur des plaques pour les deux éléments de charnière (20) portant les évidements (21).

9. Appareil de cuisson conforme à l'une des revendications 7 ou 8 caractérisé en ce que le rayon desdits arcs en cercle est légèrement inférieur à la moitié de la distance comprise entre les deux bords longitudinaux des plaques.

10. Appareil de cuisson conforme à l'une des revendications 1 à 9 caractérisé en ce que chaque plaque porte sur sa face opposée à la face de cuisson deux pieds (17, 27) adjacents auxdits deux bords longitudinaux des plaques, venant en butée lorsque les deux plaques sont disposées sensiblement dans un même plan.

## Claims

1. Cooking apparatus comprising two cooking plates (1, 2) connected together along an axis of articulation extending between two adjacent longitudinal edges of the two plates, these two plates being able to move towards each other between a position in which the two plates are essentially in the same plane and a position in which the two plates are pressed together, the longitudinal edge of one of the plates (1) bearing two spaced-apart hinge elements (10) interacting with two spaced-apart hinge elements (20) borne by the longitudinal edge of the other plate (2), by means of journals (11) engaged in complementary openings (21) extending along the axis of articulation, characterized in that the two hinge elements (10) borne by one of the plates (1) each comprise one journal (11); in that the two hinge elements (20) borne by the other plate (2) each comprise a circular-bottomed recess designed to accommodate a journal, the two recesses opening towards the opposite face of the said other plate to the cooking face, in that between the two hinge elements (10, 20) of each plate, the edge of this plate has a surface (15, 25) with a cross-section in the shape of an arc of a circle centred on the axis of articulation of the two plates, the two surfaces becoming superimposed when the two plates are pressed together.

2. Cooking apparatus according to Claim 1, characterized in that the hinge elements (10, 20) are moulded integrally with the cooking plates (1, 2).

3. Cooking apparatus according to one of Claims 1 and 2, characterized in that the journals (11) borne by the hinge elements (10) of one of the plates face towards each other.

4. Cooking apparatus according to one of Claims 1 to 3, characterized in that the said surfaces (15, 25) with a cross-section in the shape of an arc of a circle extend over an arc of about 90° from the respective longitudinal edges of the plates.

5. Cooking apparatus according to one of Claims 1 to 4, characterized in that one of the surfaces (15) with a cross-section in the shape of an arc of a circle consists of two spaced-apart tabs.

6. Cooking apparatus according to one of Claims 1 to 5, characterized in that the other surface (25) with a cross-section in the shape of an arc of a circle consists of a surface extending between the two corresponding hinge elements (20).

7. Cooking apparatus according to one of Claims 1 to 6, characterized in that each hinge element (10, 20) has a surface (16, 26) with a cross-section in the shape of an arc of a circle extending over an arc of approximately 90° or more from the adjacent longitudinal edge of the corresponding plate.

8. Cooking apparatus according to Claim 7, characterized in that the said surface (16, 26) with a cross-section in the shape of an arc of a circle extends towards the outside of the plates in the case of the two hinge elements (10) that bear the journals (11), and extends towards the inside of the plates in the case of the two hinge elements (20) that have the recesses (21).

9. Cooking apparatus according to one of Claims 7 and 8, characterized in that the radius of the said arcs of a circle is slightly smaller than half the distance between the two longitudinal edges of the plates.

10. Cooking apparatus according to one of Claims 1 to 9, characterized in that on its opposite face to the cooking face, each plate bears two feet (17, 27) adjacent to the said two longitudinal edges of the plates, and which butt together when the two plates are placed essentially in the same plane.

## Patentansprüche

1. Kochgerät mit zwei Kochplatten (1, 2), die längs einer Drehachse miteinander verbunden sind, die sich zwischen zwei benachbarten Langskanten der beiden Platten erstreckt, wobei die Platten zwischen einer Position, in welcher sie sich im wesentlichen in einer Ebene befinden, und einer Position, in welcher sie aufeinander liegen, zueinander beweglich sind, wobei die Längskante der einen der Platten (1) zwei voneinander beabstandete Scharnierelemente (10) umfaßt, die mit den beiden voneinander beabstandeten Scharnierelementen (20) an der Längskante der anderen Platte (2) mittels Zapfen (11) zusammenwirken, die in komplementäre, sich längs der Drehachse erstreckende Öffnungen (21) eingreifen, dadurch gekennzeichnet, daß die beiden an der einen Platte (1) angeordneten Scharnierelemente (10) jeweils einen Zapfen (11) aufweisen, daß die beiden an der anderen Platte (2) angeordneten Scharnierelemente (20) jeweils eine Aussparung mit kreisförmigen Boden aufweisen, die einen Zapfen aufnehmen kann, wobei die beiden Aussparungen sich zu der der Kochseite gegenüberliegenden Seite der anderen Platte öffnen, daß zwischen den beiden Scharnierelementen (10, 20) jeder Platte deren Rand eine kreisbogenförmige, um die Drehachse der beiden Platten angeordnete Schnittfläche (15, 25) aufweist, wobei die beiden Flächen sich übereinander legen, wenn die beiden Platten aufeinander liegen.

2. Kochgerät nach Anspruch 1, dadurch gekennzeichnet, daß die Scharnierelemente (10, 20) an die Kochplatten (1, 2) einstückig angeformt sind.

3. Kochgerät nach einem der Ansprüche 1 oder 2, dadurch gekennzeichnet, daß die an den Scharnierelementen (10) einer der Platten angeordneten Zapfen (11) gegeneinander gerichtet sind.

4. Kochgerät nach einem der Ansprüche 1 bis 3, dadurch gekennzeichnet, daß die kreisbogenförmigen Schnittflächen (15, 25) sich von den jeweiligen Längskanten der Platten über einen Bogen von etwa 90° erstrecken.

5. Kochgerät nach einem der Ansprüche 1 bis 4, dadurch gekennzeichnet, daß die eine der beiden kreisbogenförmigen Schnittflächen (15) von zwei voneinander beabstandeten Vorsprüngen gebildet wird.

6. Kochgerät nach einem der Ansprüche 1 bis 5, dadurch gekennzeichnet, daß die andere kreisbogenförmige Schnittfläche (25) von einer sich zwischen den beiden entsprechenden Scharnierelementen (20) erstreckenden Fläche gebildet wird.

7. Kochgerät nach einem der Ansprüche 1 bis 6, dadurch gekennzeichnet, daß jedes Scharnierelement (10, 20) eine kreisbogenförmige Schnittfläche (16, 26) aufweist, die sich von der der entsprechenden Platte benachbarten Längskante über einen Bogen erstreckt, der im wesentlichen gleich oder größer als 90° ist.

8. Kochgerät nach Anspruch 7, dadurch gekennzeichnet, daß die kreisbogenförmige Schnittfläche (16, 26) sich bei den beiden die Zapfen (11) aufweisenden Scharnierelementen (10) zur Außenseite der Platten hin erstreckt und daß sie sich bei den beiden die Aussparungen (21) aufweisenden Scharnierelementen (20) zur Innenseite der Platten hin erstreckt.

9. Kochgerät nach einem der Ansprüche 7 oder 8, dadurch gekennzeichnet, daß der Radius der Kreisbögen geringfügig kleiner ist als die Hälfte des Abstands zwischen den beiden Längskanten der Platten.

10. Kochgerät nach einem der Ansprüche 1 bis 9, dadurch gekennzeichnet, daß jede Platte an ihrer der Kochseite abgewandten Seite zwei den Längskanten der Platten benachbarte Füße (17, 27) aufweist, die gegeneinander zur Anlage kommen, wenn die beiden Platten im wesentlichen in einer Ebene angeordnet sind.
